# EUROPEAN PATENT APPLICATION

(11) **EP 1 454 850 A1**
(43) Date of publication of application: **08.09.2004**
(21) Application number: 04004180.8
(22) Date of filing: 24.02.2004
(51) Int. Cl.: B65G 17/26

(54) **Conveying device for packed products**

(30) Priority: 28.02.2003 IT BO20030108
(71) Applicant: Bergami S.r.l., 40051 Altedo (Bologna) (IT)
(72) Inventor: Bergami, Leandro, 40061 Minerbio (Bologna) (IT)
(74) Representative: Gustorf, Gerhard, Dipl.-Ing.

(57) **Abstract**

Conveying device for packed products comprising at least one pair of coplanar parallel belts (1A,1B) with reciprocal adjustable timing carrying a succession of projecting parts (2A,2B) with marked jut to retain the packages (18), interspaced by a multiplicity of projecting parts (3A,3B) to support the packages (18), said retaining projecting parts (2A,2B) having a package (18) striking face (4A,4B) perpendicular to the conveying surface (17) and a fixing part (5A,5B) to the belt (1A,1B) for relevant support limited to a section (5A,5B) of the respective base adjoining said striking face (4A,4B), said retaining projecting parts (2A,2B) moreover being supported by relevant side control and guide flaps (7,8,9) from which solely the apical portion of said support projecting parts (3A,3B) rises.

## Description

### Technical scope

In the automatic manufacturing activity of a large number of products in a multiplicity of sectors a requirement exists, at a certain stage of the relevant production procedure, to handle packages in which the products have been assembled; these package handling requirements normally also impose the relevant translation, for the most varied purposes, within the scope of contingent implemental procedures of the specific product.

In any event, automatic package handling together with relevant translation must be carried out gently in order not to leave marks on the packages, absolutely contraindicated in terms of introduction on the market.

### Purposes of the invention

The main purpose of this invention, within this scope, is to provide an innovative, simple, effective and helpful device for translation of packages of product, which prevents any possibility of even the slightest damage to the packages.

Another purpose of this invention is to achieve the preceding purpose through a multi-purpose device for a multiplicity of production sectors, modular in dimensioning as well as easily adjustable to the various sizes.

Another purpose of this invention is to achieve the preceding purposes through a device which as far as possible keeps the translated product under control in such a way as to achieve high operating speeds.

A further purpose of this invention is to, in any case and in whatever way, obtain a simple and effective device, safe in operation and relatively low-cost in consideration of the results practically achieved therewith.

### Summary extract of the solution concept

These and other purposes are all achieved with the conveying device for packed products according to this invention, comprising at least one pair of coplanar parallel belts (1) with reciprocal adjustable timing carrying a succession of projecting parts (2) with marked jut to retain the packages (18), interspaced by a multiplicity of projecting parts (3) to support the packages (18), said retaining projecting parts (2) having a package (18) striking face (4) perpendicular to the conveying surface (17) and a fixing part (5) to the belt (10) for relevant support limited to a section (5) of the respective base adjoining said striking face (4), said retaining projecting parts (2) moreover being supported by relevant side control and guide flaps (7, 8, 9) from which solely the apical portion of said support projecting parts (3) rises.

### Identification of attached drawings

Additional features and advantages of the device according to this invention will appear more evident from the following detailed description of one of its chosen but not exclusive forms of realization, represented purely by way of example and not limited to the four plates attached, where:
Figure 1 shows a side view of a belt constituting the conveying device according to this invention with the intermediate part omitted;
Figure 2 shows a plan view of the same object;
Figure 3 shows a side view of a partial cross-section of a part of a pair of belts constituting the conveying device according to this invention;
Figure 4 shows a cross-section;
Figure 5 shows a cross-section of the belt driving pulleys constituting the conveying device according to this invention;
Figure 6 shows a cross-section of the device itself;

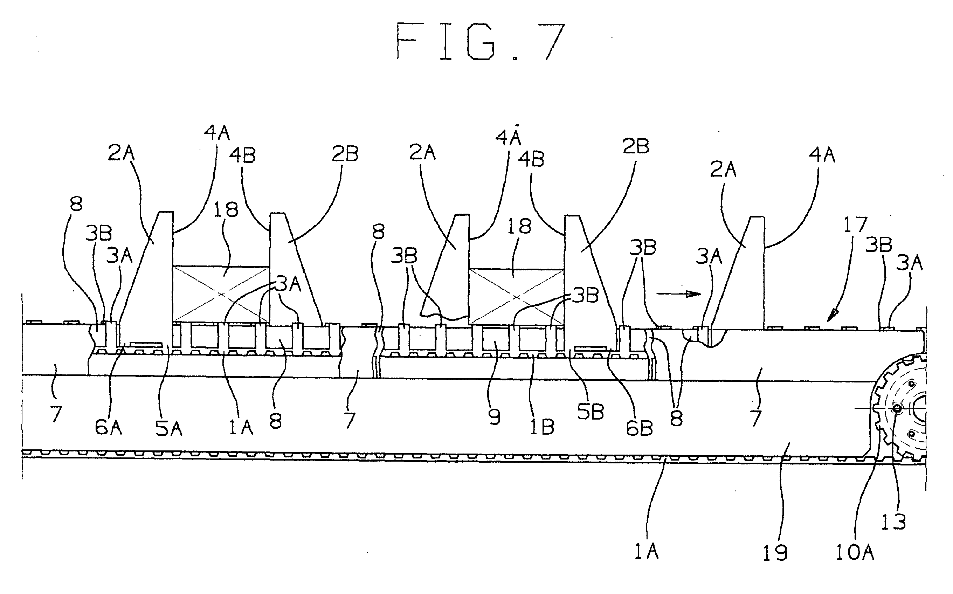

Figure 7 shows a side view of a partial cross-section of a part of the relevant assembly.

### Static description of the realization example

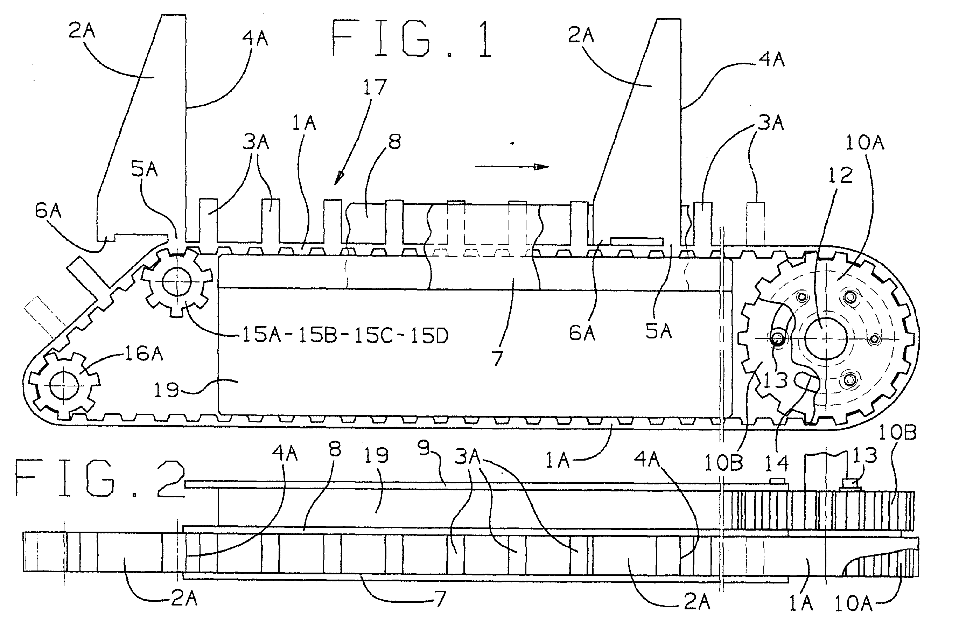

With reference to these figures, in particular Figure 1, 1A indicates the first of a first pair of twinned toothed belts made of plastic material of appropriate characteristics pulled by a driving pulley 10A and wound at the other end around an idler snub pulley 15A and a belt tightening pulley 16A to define a conveying surface 17 for packed products 18 in the direction indicated by the arrow on the striker provided with a support surface 19.

The belt 1A is fitted with a succession of projecting parts 2A with marked elevation to retain the packages 18, interspaced with a multiplicity of projecting parts 3A to support the packages 18; both the retaining projecting parts 2A and the support projecting parts are made of plastic material of appropriate characteristics designed to form a single piece with the belt 1A or, alternatively, glued to it.

Said retaining projecting parts 2A have an essentially triangular lateral shape and have a package 18 striking face 4A perpendicular to the conveying surface 17 and a fixing part 5A to the belt 1A for relevant support limited to a section 5A of the respective base adjoining said striking face 4A in such a way that the support base 6A at the other end of the base and in any case the residual part of the relevant support base on the belt 1A remains detached and free.

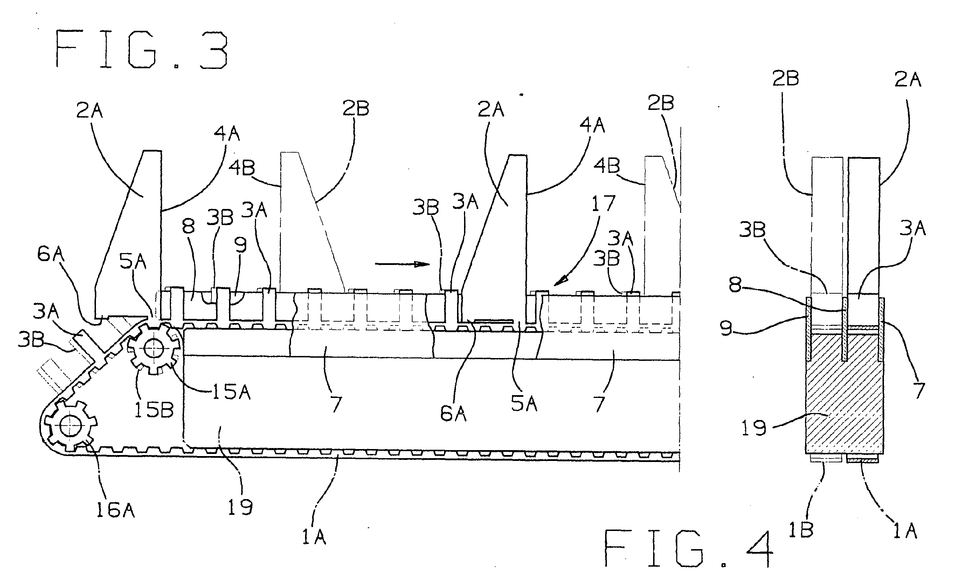

The second belt 1B of the first pair of twinned toothed belts, although being pulled in the same conveying direction indicated by the arrow, is assembled in the opposite direction to the first belt 1A in such a way that the package 18 striking faces 4B of the relevant retaining projecting parts 2B counterface the package 18 striking faces 4A of the retaining projecting parts 2A of the first belt 1A (cf. Fig. 3 and 4).

The package 18 retaining projecting parts 2A and 2B of the pair of twinned belts 1A and 1B are supported by their side control and guide flaps 7, 8 and 9 from which solely the apical portion of said support projecting parts (3) rises (cf. Fig. 3 in particular).

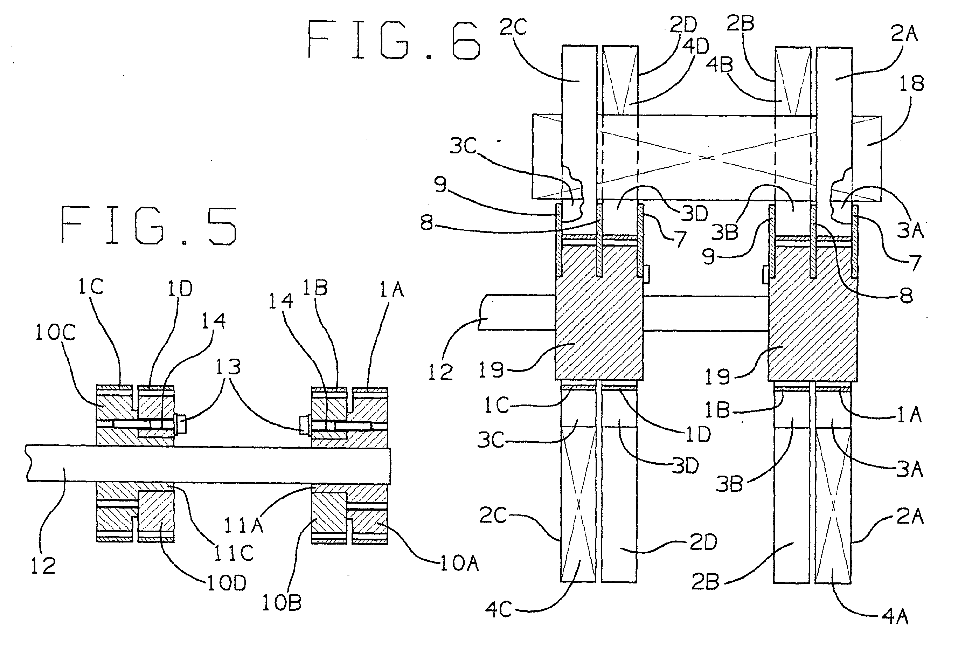

The driving pulley 10A of the first belt 1A is coupled to a driving shaft 12 (cf. Fig. 5 in particular) and coupled to the driving pulley 10B of the belt 1B, in its turn assembled on the same driving shaft 12 for interposition of a sleeve part 11A of the same driving pulley 10A of the first belt 1A.

The pulleys 10A and 10B are made reciprocally adjustable and integral for tightening of the screws 13 in the arched slots 14 made in the second pulley 10B concentric to it.

A second pair of twinned toothed belts 1C and 1D is fitted parallel and coplanar to the first pair of belts 1A and 1B (cf. Fig. 6 in particular), structured and dimensioned entirely identical and symmetrically mirrored to it, as well as powered by the same driving shaft 12 (cf. Fig. 5 in particular) by means of the respective pulleys 10C and 10D, structured, reciprocally assembled and constrained in symmetrically identical way to the pulleys 10A and 10B of the first pair of twinned toothed belts 1A and 1B for the functions described below.

### Dynamic description of the realization example

Having thus ended the static description of a chosen example of realization of the device according to this invention, in the following a dynamic description is given, i.e. the relevant operation; where the numerical references are not accompanied by the alphabetical letters adopted to identify the counterparts, the descriptive locutions should be understood as referring to all the counterparts:

The two pairs of belts 1 are driven by the pulleys 10 and, on the idler pulleys, the fixing to a limited part 5 of the retaining projecting parts 2 allows a gap without deformation with raising of the support bases 6 by the belts 1 and swing positioning of the retaining projecting parts 2 with constant gap.

Having said that, the packages 18 of products can be fed between the faces 4 of the retaining projecting parts 2 in any way suitable for the purpose, resulting deposited on the support projecting parts 3, while the retaining projecting parts 2 are controlled and guided by the flaps 7, 8, 9 in their alternation in such a way that the packages 18 are translated on a multitude of gentle apexes 3 capable of preventing even the smallest mark or harm to the packages 18, without the possibility of friction with the flaps 7, 8 and 9 since they are underelevated with respect to the support apexes 3;
at the same time, the made-to-measure package 18 supports between the striking faces 4 of the retaining projecting parts 2 constitutes effective control of the relevant positioning and hence allows high translation speeds without risks of breaking up the packages 18.

The assembly can very easily and directly be adapted to the various package sizes, for such a purpose adjusting the reciprocal timing of the belts 1, i.e. the gap between the opposite faces 4A and 4B as well as 4C and 4D of the retaining projecting parts 2A and 2B as well as 2C and 2D of the pairs of twinned belts 1A and 1B as well as 1C and 1D, by loosening the fixing screws 13 between the pulleys 10A and 10B as well as 10C and 10D and tightening them at another point of the same slot 14 such as to dictate relevant sliding between the twinned belts 1A and 1B as well as 1C and 1D up to the extent of the desired gap between the opposite faces 4A and 4B as well as 4C and 4D of the retaining projecting parts 2A and 2B as well as 2C and 2D of the pairs of twinned belts 1A and 1B as well as 1C and 1D.

### Alternative realizations

It is evident that in additional alternative forms of realization, nonetheless falling within the innovation concept implicit in the realization example described above and claimed below, the device according to this invention can alternatively be realized with equivalent techniques and mechanics, with mechanisms possibly equipped with additional integrative devices, just as all the conformations of the constituent parts thereof can be altered in a manner suited to the purpose, of which the following is intended purely by way of example and not restrictive:
the retaining projecting parts and the support projecting parts of the belt can alternatively be shaped in any way suited to the purpose;
the belts may be in a single pair or any multiplicity of pairs.

### Advantages of the invention

As appears evident from the preceding detailed description of a chosen example of realization, the device according to this invention offers the advantages corresponding to the achievement of the set and other purposes: it integrates a functional, simple, modular, multi-purpose and adjustable automated device for the transfer of packages of product where required in a large number of production processes in the most varied sectors without risks of damaging the packages, with contained noise and the possibility of easily reaching considerable operating speeds.

## Claims

1. Conveying device for packed products **characterised by** the fact that it comprises at least one pair of coplanar parallel belts (1) carrying a succession of projecting parts (2) with marked jut to retain the packages (18), interspaced by a multiplicity of projecting parts (3) to support the packages (18).

2. Device as per the preceding claim, **characterised by** the fact that said retaining projecting parts (2) have a package (18) striking face (4) perpendicular to the conveying surface (17) and a fixing part (5) to the belt (10) for relevant support limited to a section (5) of the respective base adjoining said striking face (4).

3. Device as per the preceding claims, **characterised by** the fact that said package (18) retaining projecting parts (2) are supported by side control and guide flaps (7, 8, 9) from which solely the apical portion of said support projecting parts (3) rises.

4. Device as per the preceding claims, **characterised by** the fact that said at least one pair of belts (1) have reciprocal adjustable timing for alternative reciprocal positioning of the respective driving pulleys (10).

5. Device as per the preceding claims, **characterised by** the fact that said belts (1) forming said at least one pair are assembled in reciprocally opposite direction in such a way that the package (18) striking faces (4) of the relevant retaining projecting parts (2) reciprocally counterface on the two belts (1).

6. Device as per the preceding claims, **characterised by** the fact that the driving pulley (10A) of one belt (1A) is coupled to a driving shaft (12) and coupled to the driving pulley (10B) of the other belt (1B), in its turn assembled on the same driving shaft (12) for interposition of a sleeve part (11A) of the same driving pulley (10A) of the first belt (1A).

7. Device as per the preceding claims, **characterised by** the fact that said pulleys (10A and 10B) are made reciprocally adjustable and integral for tightening of the screws (13) in the arched slots (14) made in the second pulley (10B) concentric to it.

8. Device as per the preceding claims, **characterised by** the fact that said twinned toothed belts (1) are made of plastic material with characteristics suited to the purpose.

9. Device as per the preceding claims, **characterised by** the fact that said retaining projecting parts (2) and said support projecting parts (3) are made of plastic material with characteristics suited to the purpose and designed to form a single piece with said belts (1).

10. Device as per the preceding claims, **characterised by** the fact that said retaining projecting parts (2) and said support projecting parts (3) are made of plastic material with characteristics suited to the purpose and designed to be glued to said belts (1).

11. Device as per the preceding claims, **characterised by** the fact that said retaining projecting parts (2) and said support projecting parts (3) are shaped and dimensioned in any way suitable for the purpose.

12. Device as per the preceding claims, **characterised by** the fact that said belts (1) may be in a single pair or any multiplicity of pairs.
